# EUROPEAN PATENT APPLICATION

(11) **EP 1 120 704 A1**
(43) Date of publication of application: **01.08.2001**
(21) Application number: 00200254.1
(22) Date of filing: 26.01.2000
(51) Int. Cl.: G06F 3/033

(54) **Controller for executing interactive software in multimedia computer**

(71) Applicant: Golden Card Multimedia Technology Co., Ltd., Taipei 104 (TW)
(72) Inventor: Chang, King Ting, Taipei, Taiwan 104 (TW)
(74) Representative: Wharton, Peter Robert

(57) **Abstract**

A controller (12) used with a multimedia computer (11) to play interactive software is disclosed. A plurality of picture cards (13), each showing thereon a group of selective terms for allowing a user to give a command to the computer therethrough, is mounted on the controller (12). The controller (12) identifies which picture card (13) is on process first, then detects which selective term (131) on the picture card (13) is selected, and then tells the computer (11) the selection result. The computer (11) executes the corresponding part of software accordingly. The controller (12) includes an input-sensing device (14) and a signal-transmitting device (15) to achieve the above purpose.

## Description

The present invention relates to a controller for executing interactive software in a multimedia computer, and more particularly to a controller for executing interactive software in a multimedia computer through a plurality of picture cards.

Owing to the multimedia effects and the interactively operative modes of a multimedia computer, a user can select and/or edit any desired term according to the instructions given by the computer during the period an interactive software is executed. In other words, the computer can execute the selected term and/or performs the desired operations rather than just play the disk from beginning to end. Conventionally, such operations are performed through a mouse, a trackball or a touch pad. With the popularization of multimedia computers, kids and the olds are invited into the computer world. The user-friendliness of the mouse or trackball or touch pad, however, is still unsatisfied for the kids, the olds, and especially the hand-disabled people.

Therefore, an objective of the present invention is to provide a controller for executing interactive software in a multimedia computer through picture cards, which makes the interactive multimedia computer more user-friendly and easy to be operated.

In accordance with the present invention, an especially designed controller is used with a multimedia computer to execute interactive software through picture cards. Each of the picture cards shows thereon a group of selective terms to allow a user to give a command to the computer therethrough. The controller according to the present invention includes an input-sensing device associated with the picture cards, including a plurality of sensors respectively corresponding to the selective terms shown on each of the picture cards, and outputting a triggering signal represented by one of the plurality of sensors in response to an operation of the user on the selected one of the picture cards to identify which selective term is to be further executed, and a signal-transmitting device electrically connected to the input-sensing device for transmitting the triggering signal from the input-sensing device to the multimedia computer to execute a function represented by the selected term. Characteristically, each of the picture cards has an identifying mark thereon, and the controller further comprises a detector for monitoring the identifying mark. The detector generates a switching signal when the identifying mark is changed. The switching signal is transmitted to the multimedia computer by the signal-transmitting device to be ready for executing another group of selective terms.

In a preferred embodiment, the identifying mark is a number of through holes and the detector is adapted to detect a through-hole type of identifying mark. In another embodiment, the identifying mark is a group of bar codes and the detector is adapted to detect a bar-code type of identifying mark.

In accordance with another aspect of the present invention, the input-sensing device is a pressure sensing matrix circuit. Alternatively, the input-sensing device may be an analog resistive touch pad.

In accordance with another aspect of the present invention, the multimedia system further includes an IR receiver, and the signal-transmitting device is an IR emitter for transmitting the triggering signal to the IR receiver to execute the function of the selected term. It is required that the triggering signal of IR type comply with the requirement of IrDA (Infrared Data Association) in order to be uses in a personal computer.

The present invention may best be understood through the following description with reference to the accompanying drawings, in which:
Fig. 1 is a schematic diagram showing a preferred embodiment of a controller according to the present invention and a multimedia computer the controller is used with;
Fig. 2 is a schematic block diagram showing a preferred embodiment of a controller according to the present invention; and
Fig. 3 is a schematic block diagram of the controller of Fig. 2, which shows the detection of the change of picture cards.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

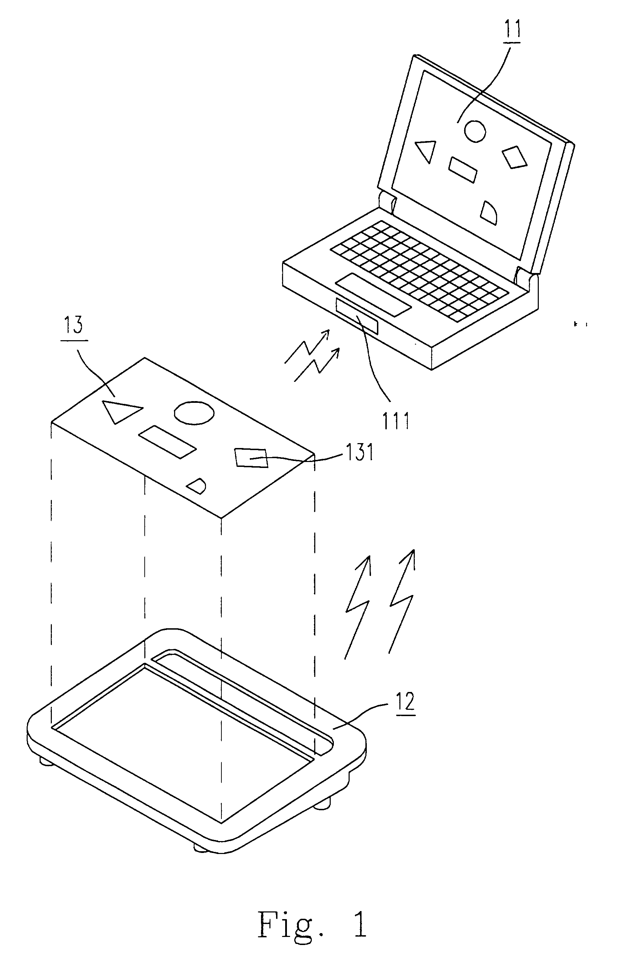

Please refer to Fig. 1 which is a schematic diagram showing a preferred embodiment of a controller 12 according to the present invention and a multimedia computer 11 the controller 12 is used with. A user can communicate with the multimedia computer 11 through a picture card 13. In other words, the user gives a command to execute a desired software through the picture card 13 corresponding to the software to be executed. The picture card 13 has patterns 131 thereon, which respectively correspond to the patterns 111 shown on the monitor of the computer 11 as selective terms. When the interactive software is to be executed by the computer 11, the user places the picture card 13 on the controller 12, and then selects a specific item to be executed by touching one of the patterns 131. Preferably, the picture card 13 is placed on an upper face of the casing of the controller 12.

For example, if a video CD having contents concerning the introduction of wild animals is to be played, the VCD is inserted in to the disk drive of the computer, and a picture card on which several animal patterns are previously printed is placed on the controller. Meanwhile, a picture identical to that on the picture card is shown on the monitor of the computer. When a user is interested in a certain animal, he only needs to touch or press the corresponding animal pattern on the picture card, the computer will execute the programs related to the selected animal to display further information, thereby achieving the purpose of interactive operation.

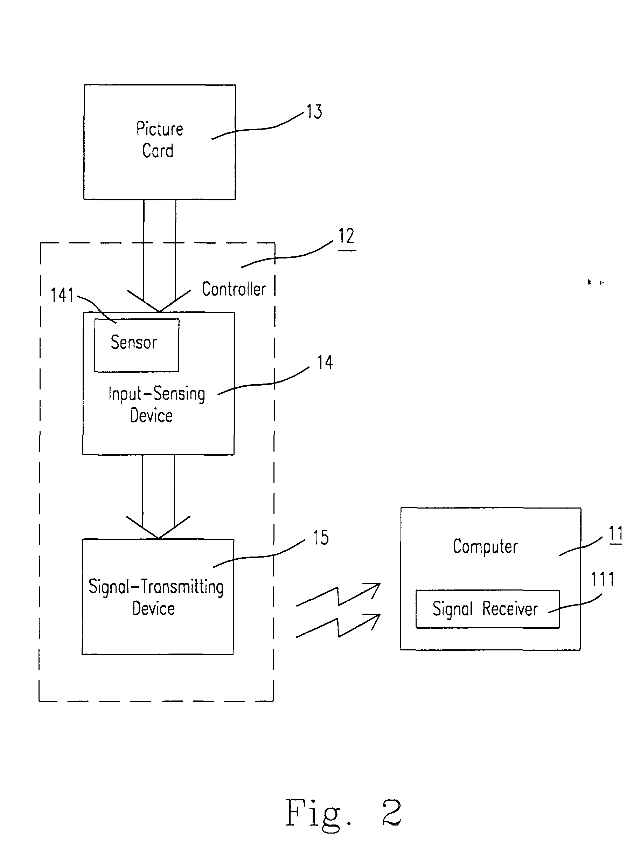

Referring to Fig. 2 which is a circuit block diagram showing a preferred embodiment of the controller 12 of Fig. 1, the controller 12 includes an input-sensing device 14 and a signal-transmitting device 15. The input-sensing device 14 is located beneath the picture card 13 and consists of a plurality of sensors 141. Each of the patterns 131 shown on the picture card 13 corresponds to at least one sensor 141. When the user touch or press one of the patterns 131 as a selective term, the corresponding sensor(s) 141 will be actuated to output a triggering signal represented by the sensor(s) so as to identify the selective term and execute relative program. Then the signal-transmitting device 15 electrically connected to the input-sensing device 14 transmits the triggering signal to the multimedia computer 11 to execute the function represented by the selected term.

In the preferred embodiments of Figs. 1 and 2, the command the user gives through the controller 12 and the picture card 13 is conveyed to the multimedia computer 11 in a wireless transmission manner. For example, the signal-transmitting device 15 may be an IR emitter, and in this case, the multimedia system 11 needs to be installed therein a signal receiver 111, i.e. an IR receiver in this case, for receiving the signal transmitted by the IR emitter. Preferably, the triggering signal is made to become an IR signal having a specification stipulated by Infrared Data Association (IrDA) so as to be suitable for the wireless transmission with a personal computer.

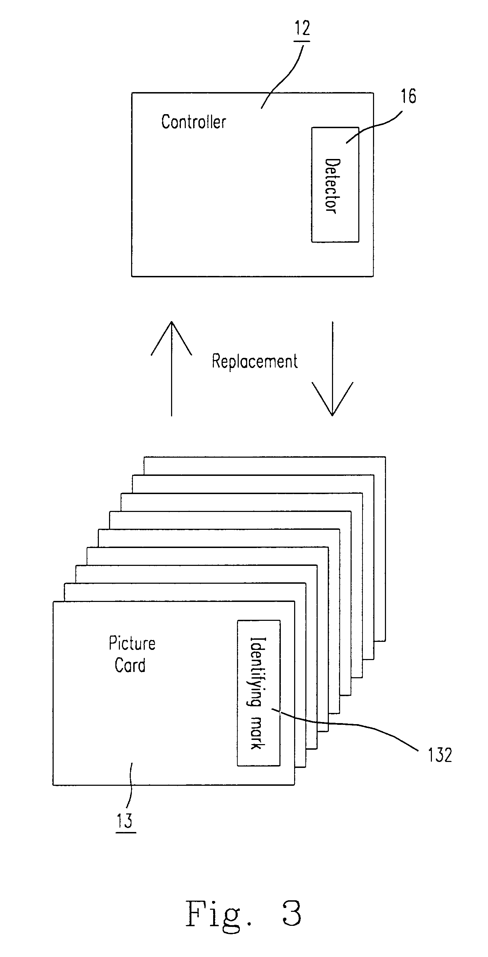

For advanced VCD contents in which many levels of option are provided, a plurality of picture cards 13 rather than only one picture card are used. In this case, a unique identifying mark 132 is provided on each of the picture cards 13, as shown in Fig. 3, to tell the computer which group of selective items is on process. For this purpose, a detector 16 is provided. Previously, the picture cards 13 are marked with various numbers of through holes or different bar codes 132 at a specific position thereon for identification. When one of the picture cards 13 is placed on the controller 12, the identifying mark 132 on the picture card 13 is aligned with the detector 16 of the controller 12 so that the detector 16 can identify which card is in charge and output a switching signal to the computer through the IR emitter when the identifying mark is changed. Meanwhile, the picture shown on the monitor will change to the corresponding picture on the selected picture card, and the group of patterns on the selected picture card is available for selection. Depending on the types of the identifying marks, the detector can be a light-responsive sensor or a bar-code reader. In this way, various of operations can be easily made by using the present controller.

## Claims

1. A controller (12) for executing interactive software in a multimedia computer (11) through a plurality of picture cards (13), comprising:
an input-sensing device (14) associated with said picture cards (13), including a plurality of sensors (141) respectively corresponding to selective terms (131) shown on each of said picture cards (13), and outputting a triggering signal represented by one of said plurality of sensors (141) in response to an operation of said user on an selected one of said picture cards (13) so as to identify which selective term (131) is to be further executed; and
a signal-transmitting device (15) electrically connected to said input-sensing device (14) for transmitting said triggering signal from said input-sensing device (14) to said multimedia computer (11) to execute a function represented by said selected term (131);
and characterized in that each of said picture cards (13) has an identifying mark (132) thereon, and said controller (12) further comprises a detector (16) for monitoring said identifying mark (132), said detector generating a switching signal when said identifying mark (132) is changed, which is transmitted to said multimedia computer (11) by said signal-transmitting device (15) to be ready for executing another group of selective terms (131).

2. The controller (12) as claimed in claim 1, wherein said input-sensing device (14) is a pressure sensing matrix circuit.

3. The controller (12) as claimed in claim 1, wherein said input-sensing device (14) is an analog resistive touch pad.

4. The controller (12) as claimed in claim 1, wherein said multimedia computer (11) includes an IR receiver (111), and said signal-transmitting device (15) is an IR emitter for producing an IR signal corresponding to said triggering signal and having a specification stipulated by Infrared Data Association (IrDA), and transmitting said triggering signal to said IR receiver (111) to execute said function of said selected term (131).

5. The controller (12) as claimed in claim 1, wherein said detector (16) is adapted to detect a through-hole type of identifying mark (132).

6. The controller (12) as claimed in claim 1, wherein said detector (16) is adapted to detect a bar-code type of identifying mark (132).
